# EUROPEAN PATENT APPLICATION

(11) **EP 4 582 835 A1**
(43) Date of publication of application: **09.07.2025**
(21) Application number: 23860007.6
(22) Date of filing: 10.08.2023
(51) Int. Cl.: G01S 7/481, G01S 7/4914

(54) **RANGING DEVICE**

(30) Priority: 02.09.2022 JP 2022139817
(71) Applicant: DENSO CORPORATION, Kariya-city, Aichi 448-8661 (JP)
(72) Inventor: HOASHI Yoshiaki, Kariya-city, Aichi 448-8661 (JP)
(74) Representative: Kuhnen & Wacker Patent- und Rechtsanwaltsbüro PartG mbB
(86) International application number: PCT/JP2023/029257
(87) International publication number: WO 2024/048242

(57) **Abstract**

A distance measuring device (10) includes a light emitting unit (20) that emits irradiation light (Lo), a light receiving unit (60) having a light receiving surface (61) for receiving incident light (Li) including reflected light of the irradiation light, and in which one pixel (65) is composed of a plurality of single-photon avalanche diodes (68), an aperture unit (50) having an opening (55) through which the incident light incident on the light receiving unit passes and limiting the amount of the incident light passing through, and an optical system (40) having different refractive powers in a longitudinal direction of the opening and a lateral direction of the opening, the optical system focusing the incident light on the light receiving surface in the longitudinal direction and focusing the incident light on the opening in the lateral direction.

## Description

### CROSS REFERENCE TO RELATED APPLICATIONS

This application is based on Japanese Application No. 2022-139817 filed on September 2, 2022, the contents of which are incorporated herein by reference.

### TECHNICAL FIELD

The present disclosure relates to a distance measuring device.

### BACKGROUND

Patent Document 1 discloses a distance measuring device that measures a distance to an object by measuring the time it takes for a laser beam to be emitted, reflected by the object, and incident on a detector equipped with a single photon avalanche diode (SPAD).

### PRIOR ART DOCUMENT

### PATENT DOCUMENT

Patent Document 1: US 10663586 B

### SUMMARY OF INVENTION

Since an output signal of the SPAD is binary, in order to measure light intensity at multiple stages using the SPAD, one pixel on a light receiving surface must be composed of multiple SPADs. However, as a result of detailed study by the inventors, it was found that if the number of SPADs constituting one pixel is increased without changing a size of each SPAD, the amount of disturbance light incident on one pixel increases as an area of one pixel increases, and the ratio of the amount of signal light (laser light) to the amount of disturbance light incident on one pixel (hereinafter referred to as an optical S/N ratio) decreases. As a result, there is a possibility that it will not be possible to measure the distance to an object. Therefore, there is a need for a technique for improving a resolution of light intensity while suppressing a decrease in the optical S/N ratio (signal-to-noise ratio).

The present disclosure can be realized as the following embodiments.

According to one aspect of the present disclosure, a distance measuring device is provided. The distance measuring device includes a light emitting unit that emits irradiation light, a light receiving unit having a light receiving surface for receiving incident light including reflected light of the irradiation light, and in which one pixel is composed of a plurality of single-photon avalanche diodes, an aperture unit having an opening through which the incident light incident on the light receiving unit passes and limiting the amount of the incident light passing through, and an optical system having different refractive powers in a longitudinal direction of the opening and a lateral direction of the opening, the optical system focusing the incident light on the light receiving surface in the longitudinal direction and focusing the incident light on the opening in the lateral direction.

According to the distance measuring device of this embodiment, it is possible to improve the resolution of the light intensity while suppressing the decrease in the optical S/N ratio.

### BRIEF DESCRIPTION OF THE DRAWINGS

The above and other objects, features and advantages of the present disclosure will become more apparent from the following detailed description made with reference to the accompanying drawings. In the drawings:
FIG. 1 is an explanatory diagram showing a schematic configuration of a distance measuring device according to a first embodiment;
FIG. 2 is a perspective view showing a light collecting optical system, an aperture unit, and a light receiving unit according to the first embodiment;
FIG. 3 is a first cross-sectional view showing a configuration of the light collecting optical system according to the first embodiment;
FIG. 4 is a second cross-sectional view showing the configuration of the light collecting optical system of the first embodiment;
FIG. 5 is an explanatory diagram showing the configuration of a light receiving surface of the first embodiment;
FIG. 6 is an explanatory diagram showing how the number of columns of light receiving elements constituting one pixel is increased;
FIG. 7 is a first cross-sectional view showing a configuration of a light collecting optical system according to a second embodiment;
FIG. 8 is a second cross-sectional view showing the configuration of the light collecting optical system of the second embodiment;
FIG. 9 is a first cross-sectional view showing a configuration of a light collecting optical system according to a third embodiment;
FIG. 10 is a second cross-sectional view showing the configuration of the light collecting optical system of the third embodiment;
FIG. 11 is a first cross-sectional view showing a configuration of a light collecting optical system according to a fourth embodiment;
FIG. 12 is a second cross-sectional view showing the configuration of the light collecting optical system of the fourth embodiment;
FIG. 13 is an explanatory diagram showing a schematic configuration of a distance measuring device according to a fifth embodiment; and
FIG. 14 is an explanatory diagram showing a configuration of an aperture unit according to a fifth embodiment.

### DETAILED DESCRIPTION

### A. First Embodiment:

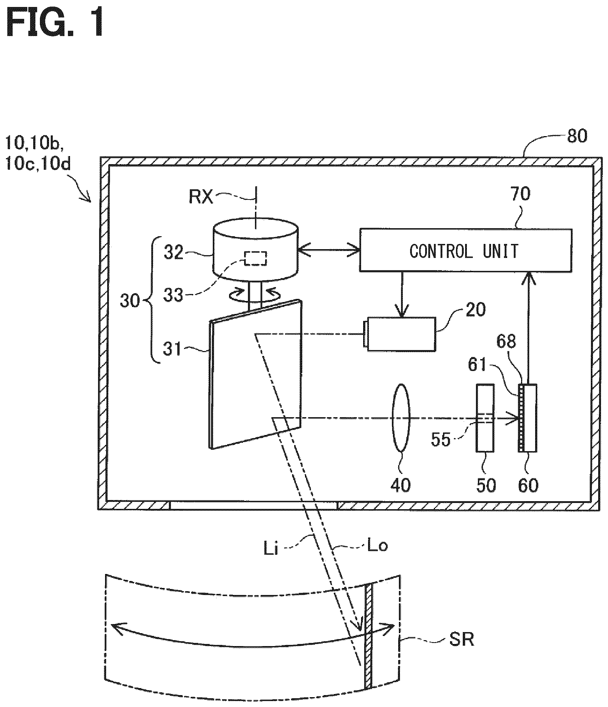

As shown in FIG. 1, in the present embodiment, a distance measuring device 10 includes a light emitting unit 20, a scanning unit 30, a light collecting optical system 40, an aperture unit 50, a light receiving unit 60, a control unit 70, and a housing 80. The light emitting unit 20, the scanning unit 30, the light collecting optical system 40, the aperture unit 50, the light receiving unit 60, and the control unit 70 are housed within the housing 80. The control unit 70 may be housed in a housing separate from the housing 80.

The light emitting unit 20 emits irradiation light Lo. In the present embodiment, the light emitting unit 20 is equipped with an edge-emitting laser diode, and emits a linear laser light along a vertical direction of the distance measuring device 10 as irradiation light Lo from an end surface of the laser diode arranged parallel to the vertical direction of the distance measuring device 10. The scanning unit 30 includes a mirror 31 that reflects the irradiation light Lo, a motor 32 that rotates the mirror 31 around a rotation axis RX parallel to the vertical direction of the distance measuring device 10, and a rotation angle sensor 33 that detects a rotation angle of the mirror 31. The scanning unit 30 rotates the mirror 31 by the motor 32 to cause the irradiation light Lo emitted from the light emitting unit 20 to scan the distance measuring device 10 in a horizontal direction. When an object is present within a scanning range SR, which is the range scanned by the irradiation light Lo, the irradiation light Lo is reflected by the surface of the object, and the incident light Li, which includes the reflected light of the irradiation light Lo, returns to the mirror 31. The incident light Li is reflected by the mirror 31 and enters the light collecting optical system 40.

The light collecting optical system 40 includes at least one lens and collects the incident light Li. The aperture unit 50 is disposed behind the light collecting optical system 40 in a traveling direction of the incident light Li. The aperture unit 50 is made of a material having light blocking properties, and has an opening 55 that passes the incident light Li. The light receiving unit 60 is disposed behind the aperture unit 50 in the traveling direction of the incident light Li. The light receiving unit 60 has a light receiving surface 61 that receives the incident light Li. The incident light Li that has passed through the light collecting optical system 40 and the opening 55 of the aperture unit 50 is incident on the light receiving surface 61. The light receiving surface 61 is composed of a plurality of light receiving elements 68 that detect the incident light Li. In the present embodiment, the light receiving element 68 is a single photon avalanche diode.

The control unit 70 is composed of a computer equipped with a CPU, a memory, an input/output interface for inputting and outputting signals from the outside, and an internal bus. The control unit 70 measures a distance between an object within the scanning range SR and the distance measuring device 10 by controlling the light emitting unit 20, the scanning unit 30, and the light receiving unit 60. Specifically, the control unit 70 causes the light emitting unit 20 to emit the irradiation light Lo in pulses, measures the time from when the irradiation light Lo is emitted to when the incident light Li is detected by the light receiving unit 60, and uses this time to calculate the distance between the distance measuring device 10 and a reflection point on the object. In the present embodiment, the control unit 70 causes the light emitting unit 20 to emit the irradiation light Lo in pulses while rotating the mirror 31 using the motor 32. The control unit 70 detects the rotation angle of the mirror 31 when the incident light Li is detected by the rotation angle sensor 33, and uses the rotation angle to identify an azimuth angle of the reflection point on the object relative to the distance measuring device 10.

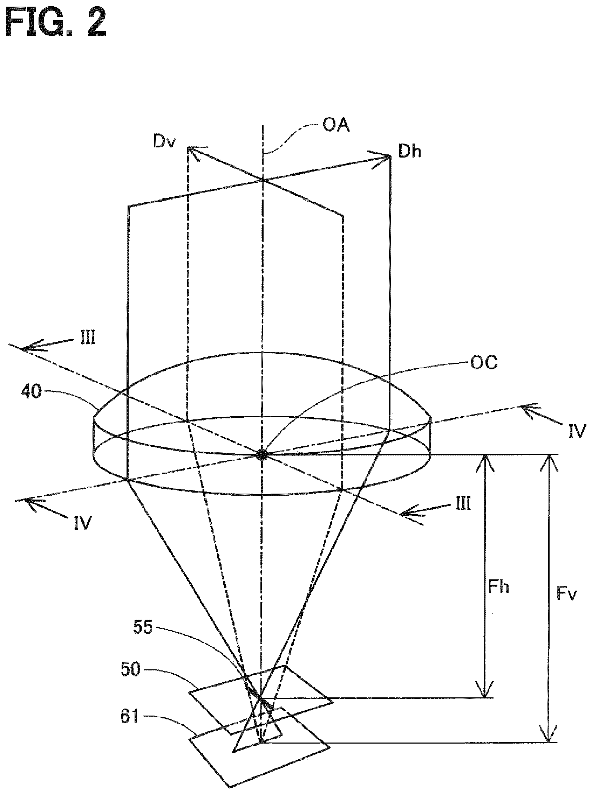

As shown in FIG. 2, in the present embodiment, the aperture unit 50 is configured in a flat plate shape. The opening 55 of the aperture unit 50 is formed in a slit shape, that is, in a long and narrow rectangular shape. The longitudinal direction of the opening 55 is parallel to the vertical direction Dv of the distance measuring device 10, and the lateral direction of the opening 55 is parallel to the horizontal direction Dh of the distance measuring device 10. The aperture unit 50 is disposed opposite to the light receiving surface 61 of the light receiving unit 60, and limits the amount of incident light Li passing through.

The light collecting optical system 40 is disposed on the opposite side of the aperture unit 50 from the light receiving surface 61. The light collecting optical system 40 has a positive refractive power in the horizontal direction Dh and the vertical direction Dv. The refractive power of the light collecting optical system 40 differs in the horizontal direction Dh and the vertical direction Dv. Since the refractive power is equal to the reciprocal of the focal length, the focal length of the light collecting optical system 40 differs in the horizontal direction Dh and the vertical direction Dv. In the present embodiment, the focal length Fh of the light collecting optical system 40 in the horizontal direction Dh is shorter than the focal length Fv of the light collecting optical system 40 in the vertical direction Dv. The light collecting optical system 40, the aperture unit 50, and the light receiving unit 60 are arranged so that a center of the opening 55 is located on an extension of the optical axis OA of the light collecting optical system 40, the distance between a principal point OC of the light collecting optical system 40 and the center of the opening 55 is the same as the focal length Fh of the light collecting optical system 40 in the horizontal direction Dh, and the distance between the principal point OC of the light collecting optical system 40 and the light receiving surface 61 is the same as the focal length Fv of the light collecting optical system 40 in the vertical direction Dv. The light collecting optical system 40 focuses the incident light Li to the center of the opening 55 in the horizontal direction Dh, and focuses the incident light Li to the light receiving surface 61 in the vertical direction Dv. Therefore, the incident light Li is incident on the light receiving surface 61 defocused in the horizontal direction Dh, and the incident light Li is incident in just focus in the vertical direction Dv.

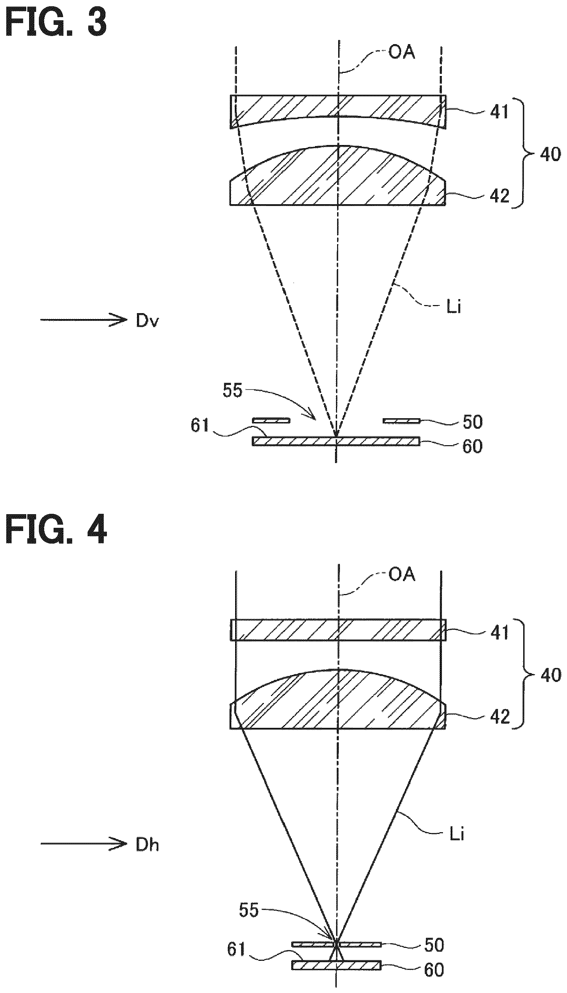

In FIGS. 1 and 2, the light collecting optical system 40 is simplified and illustrated as a single lens, but as shown in FIGS. 3 and 4, in the present embodiment, the light collecting optical system 40 is composed of a first lens 41 and a second lens 42 arranged between the first lens 41 and the aperture unit 50. In the present embodiment, the first lens 41 is a cylindrical lens, more specifically, a concave cylindrical lens having a central axis parallel to the horizontal direction Dh, and is arranged so that its flat surface faces the mirror 31 and its cylindrical surface having a curvature in the vertical direction Dv faces the second lens 42. The second lens 42 is a spherical lens, more specifically, a plano-convex lens, and is arranged so that its spherical surface having curvature in the horizontal direction Dh and the vertical direction Dv faces the first lens 41 and its flat surface faces the aperture unit 50. The cylindrical surface referred to here means a curved surface obtained by cutting out a part of a cylindrical surface, and the spherical surface referred to here means a curved surface obtained by cutting out a part of a spherical surface. In the present embodiment, the light collecting optical system 40 is composed of two lenses 41 and 42, and therefore the focal lengths Fh and Fv of the light collecting optical system 40 described above are composite focal lengths of the two lenses 41 and 42.

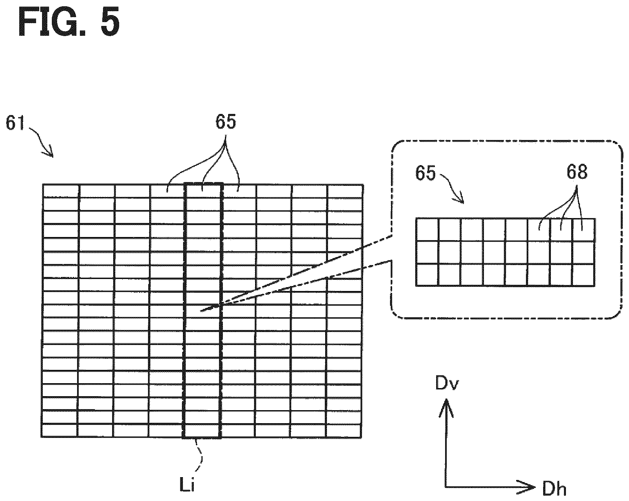

As shown in FIG. 5, the light receiving surface 61 has a plurality of pixels 65 arranged in a lattice pattern along the horizontal direction Dh and the vertical direction Dv. Each pixel 65 is composed of a plurality of light receiving elements 68 arranged in a grid pattern along the horizontal direction Dh and the vertical direction Dv. In the following description, each pixel 65 will be referred to as one pixel 65. In the present embodiment, a length of one pixel 65 in the horizontal direction Dh is longer than a length of one pixel 65 in the vertical direction Dv. The length of one pixel 65 in the horizontal direction Dh is longer than the length of the opening 55 in the horizontal direction Dh. In FIG. 5, the area on the light receiving surface 61 where the incident light Li is incident is indicated by a dashed line. In the present embodiment, the incident light Li is incident on one column of pixels 65. In the present embodiment, the area on which the incident light Li is incident does not move even if the mirror 31 is rotated.

A position resolution of the distance measuring device 10 in the vertical direction Dv is determined by the center-to-center distance between adjacent pixels 65 in the vertical direction Dv. The azimuth angle resolution of the distance measuring device 10 is determined by the amount of change in the rotation angle of the mirror 31 during the time interval during which the irradiated light Lo is emitted. Since the light receiving elements 68 are single-photon avalanche diodes, the light intensity resolution of the distance measuring device 10 is determined by the number of light receiving elements 68 that constitute one pixel 65.

The distance measuring device 10 is mounted on, for example, a vehicle and is used to measure the distance between the vehicle and an object such as a person or an obstacle. Since the reflectance of the irradiated light Lo differs between the asphalt surface and the white line on the road, the light intensity of the reflected light differs between when the irradiated light Lo is reflected by the asphalt surface and when the irradiated light Lo is reflected by the white line. Therefore, the position of the white line can be estimated using the light intensity at each reflection point measured by the distance measuring device 10. However, when the light intensity resolution is not high enough, it is not possible to distinguish between the white line and the asphalt surface, and therefore it is not possible to estimate the position of the white line.

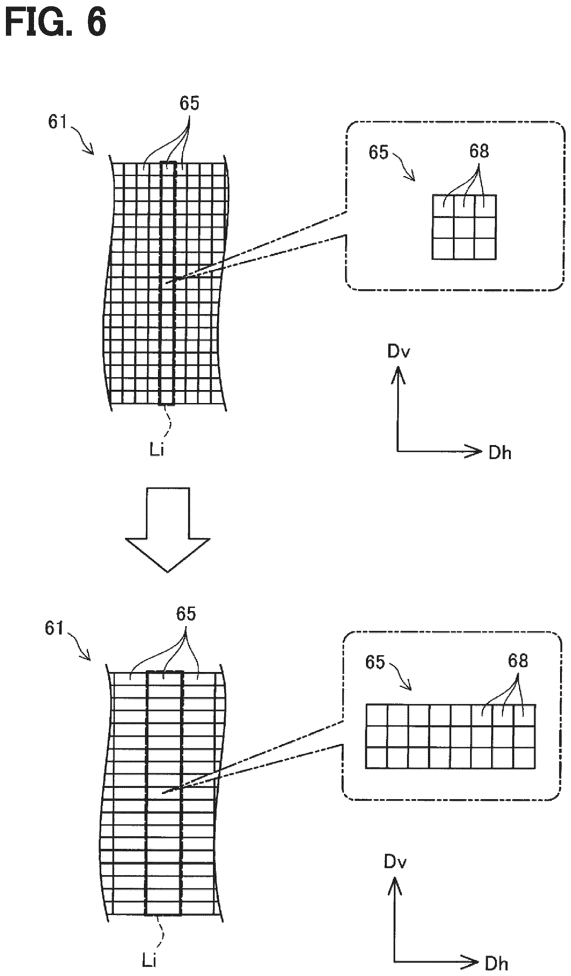

As shown in FIG. 6, when the number of light receiving elements 68 constituting one pixel 65 is increased from 9 (=3×3 (vertical×horizontal)) to 24 (=3×8 (vertical×horizontal)), the light intensity resolution can be improved from 9 levels to 24 levels. However, in a configuration in which the aperture unit 50 is not provided, when the number of columns in the horizontal direction Dh of the light receiving elements 68 that constitute one pixel 65 is increased, the amount of disturbance light incident on one pixel 65 increases as the area of one pixel 65 increases, which may result in a decrease in the optical signal-to-noise ratio (S/N ratio). For example, in an environment in which disturbance light is uniformly incident on the light receiving surface 61 from between the light collecting optical system 40 and the light receiving surface 61, the amount of disturbance light incident on one pixel 65 increases by 8/3 times. However, even if the horizontal length Dh of the incident light Li at the light receiving surface 61 is increased by increasing the defocus amount, the amount of incident light Li incident on one pixel 65 does not increase, and the optical S/N ratio decreases by 3/8 times.

Furthermore, in a configuration in which the refractive power of the light collecting optical system 40 is the same in the horizontal direction Dh and the vertical direction Dv, when the amount of defocus in the horizontal direction Dh is increased in accordance with an increase in the number of columns in the horizontal direction Dh of the light receiving elements 68 that constitute one pixel 65, the amount of defocus in the vertical direction Dv also increases, thereby reducing the density of the incident light Li in the vertical direction Dv, reducing the amount of incident light Li incident on one pixel 65, and reducing the optical S/N ratio. When the number of rows in the vertical direction Dv of the light receiving elements 68 constituting one pixel 65 is increased so as not to reduce the optical S/N ratio, the position resolution in the vertical direction Dv decreases.

In contrast, according to the distance measuring device 10 of the present embodiment described above, the aperture unit 50 having a slit-shaped opening 55 whose longitudinal direction is parallel to the vertical direction Dv and whose short direction is parallel to the horizontal direction Dh is arranged between the light collecting optical system 40 and the light receiving surface 61, so that even if the number of columns in the horizontal direction Dh of the light receiving elements 68 that constitute one pixel 65 is increased, the amount of disturbance light incident on one pixel 65 does not increase. In addition, since the distance measuring device 10 is equipped with the light collecting optical system 40 having different refractive powers in the horizontal direction Dh and the vertical direction Dv, it is possible to suppress an increase in the defocus amount in the vertical direction Dv that accompanies an increase in the defocus amount in the horizontal direction Dh in accordance with an increase in the number of columns in the horizontal direction Dh of the light receiving elements 68 that constitute one pixel 65, thereby suppressing a decrease in the optical S/N ratio. Therefore, by increasing the number of columns in the horizontal direction Dh of the light receiving elements 68 that constitute one pixel 65 and increasing the amount of defocus in the horizontal direction Dh without changing the amount of defocus in the vertical direction Dv, it is possible to increase the light intensity resolution while suppressing a decrease in the optical S/N ratio, and also to suppress a decrease in the positional resolution in the vertical direction Dv.

Furthermore, in the present embodiment, since the first lens 41 of the light collecting optical system 40 is a concave cylindrical lens and the second lens is a plano-convex lens, by adjusting the position and orientation of the second lens 42 and then adjusting the position and orientation of the first lens 41, it is possible to easily align the light collecting optical system 40, the aperture unit 50, and the light receiving surface 61. In addition, it is also possible to align the light collecting optical system 40, the aperture unit 50, and the light receiving surface 61 by adjusting the position and orientation of the aperture unit 50 and adjusting the position and orientation of the light receiving surface 61 without moving the first lens 41 and the second lens 42.

In addition, in the present embodiment, the length of the opening 55 of the aperture unit 50 in the horizontal direction Dh is shorter than the length of one pixel 65 in the horizontal direction Dh, and therefore the aperture unit 50 can effectively suppress an increase in the amount of disturbance light incident on one pixel 65.

In addition, in the present embodiment, the light emitting unit 20 emits the linear irradiation light Lo along the vertical direction Dv, and the light receiving surface 61 has a plurality of pixels 65 arranged along the vertical direction Dv, so that the positional resolution in the vertical direction Dv can be ensured.

In addition, in the present embodiment, the scanning unit 30 is provided that scans the irradiation light Lo emitted from the light emitting unit 20 along the horizontal direction Dh by rotating the mirror 31 and causes the incident light Li to be incident on the light collecting optical system 40, and the azimuth angle resolution is determined by the amount of change in the rotation angle of the mirror 31 during the time interval at which the irradiation light Lo is emitted. Therefore, even if the light intensity resolution is increased by increasing the number of columns in the horizontal direction Dh of the light receiving elements 68 that constitute one pixel 65, the azimuth angle resolution does not decrease.

### B. Second Embodiment:

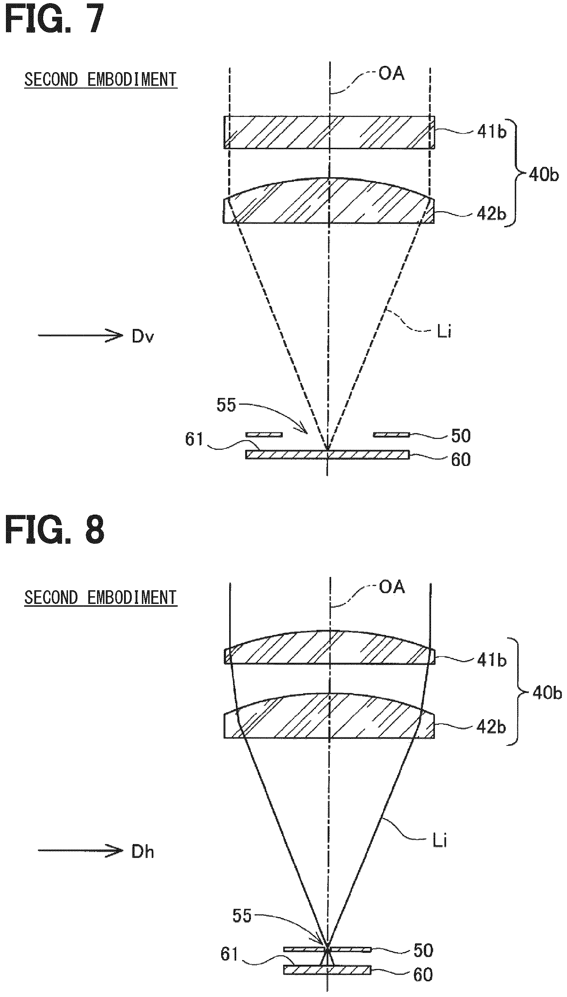

As shown in FIGS. 7 and 8, in a distance measuring device 10b of the second embodiment, the configuration of a light collecting optical system 40b is different from that of the first embodiment. Specifically, in the present embodiment, the first lens 41b of the light collecting optical system 40b is a convex cylindrical lens having a central axis parallel to the vertical direction Dv, and is arranged so that the cylindrical surface having a curvature in the horizontal direction Dh faces the mirror 31 and the flat surface faces the second lens 42b. The second lens 42b of the light collecting optical system 40b is a plano-convex lens, and is disposed so that its spherical surface having curvatures in the horizontal direction Dh and the vertical direction Dv faces the first lens 41b and its flat surface faces the aperture unit 50. The other configurations are the same as those of the first embodiment. The distance measuring device 10b of the second embodiment described above, like the first embodiment, can increase the light intensity resolution while suppressing a decrease in the optical S/N ratio, and can suppress a decrease in the positional resolution in the vertical direction Dv.

### C. Third Embodiment:

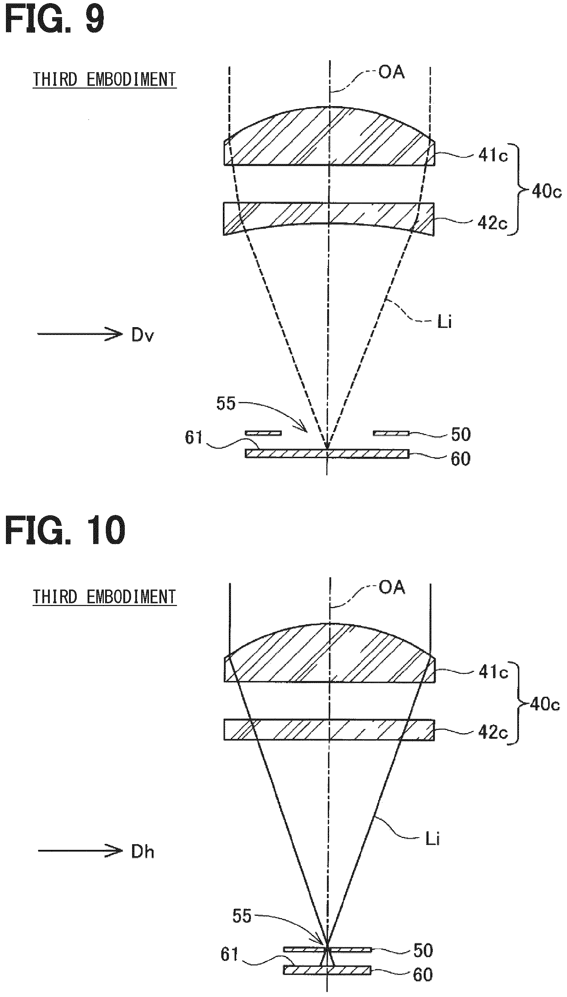

As shown in FIGS. 9 and 10, in the distance measuring device 10c of the third embodiment, the configuration of a light collecting optical system 40c is different from that of the first embodiment. Specifically, in the present embodiment, the first lens 41c of the light collecting optical system 40c is a plano-convex lens, and is arranged so that its spherical surface having curvature in the horizontal direction Dh and the vertical direction Dv faces the mirror 31, and its flat surface faces the second lens 42c. The second lens 42c of the light collecting optical system 40c is a concave cylindrical lens having a central axis parallel to the horizontal direction Dh, and is arranged so that its flat surface faces the first lens 41c and its cylindrical surface having a curvature in the vertical direction Dv faces the aperture unit 50. The other configurations are the same as those of the first embodiment. The distance measuring device 10c of the third embodiment described above, like the first embodiment, can increase the light intensity resolution while suppressing a decrease in the optical S/N ratio, and can suppress a decrease in the positional resolution in the vertical direction Dv.

### D. Fourth Embodiment:

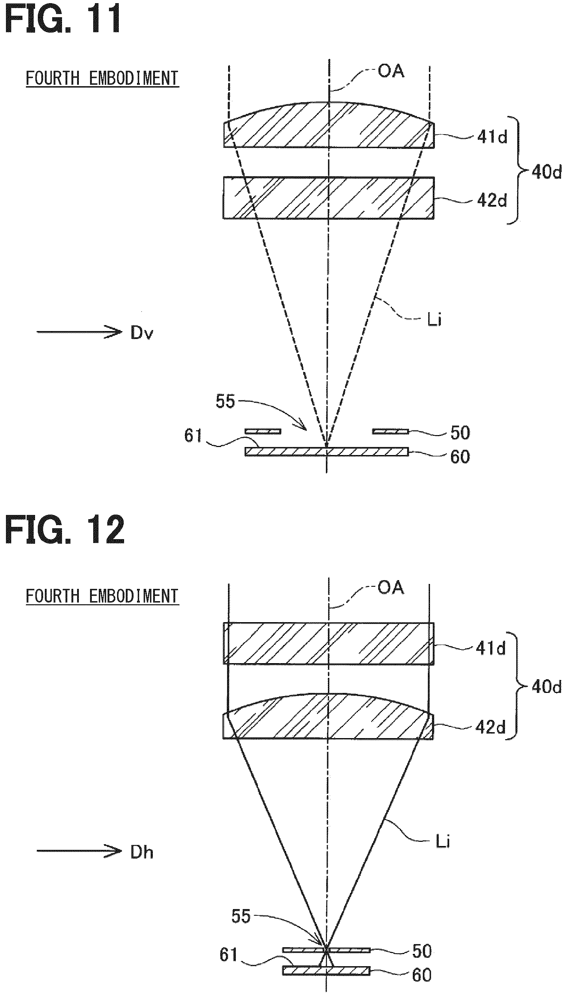

As shown in FIGS. 11 and 12, in a distance measuring device 10d of the fourth embodiment, the configuration of a light collecting optical system 40d is different from that of the first embodiment. Specifically, in the present embodiment, the first lens 41d of the light collecting optical system 40d is a convex cylindrical lens having a central axis parallel to the horizontal direction Dh, and is arranged so that the cylindrical surface having a curvature in the vertical direction Dv faces the mirror 31 and the flat surface faces the second lens 42d. The second lens 42d of the light collecting optical system 40d is a convex cylindrical lens having a central axis parallel to the vertical direction Dv, and is arranged so that its cylindrical surface having a curvature in the horizontal direction Dh faces the first lens 41d and its flat surface faces the aperture unit 50. The other configurations are the same as those of the first embodiment. The distance measuring device 10d of the fourth embodiment described above, like the first embodiment, can increase the light intensity resolution while suppressing a decrease in the optical S/N ratio, and can suppress a decrease in the positional resolution in the vertical direction Dv. In addition, in the present embodiment, the first lens 41d is a cylindrical lens having a central axis parallel to the horizontal direction Dh, and the second lens 42d is a cylindrical lens having a central axis parallel to the vertical direction Dv, so that the focal position in the horizontal direction Dh and the focal position in the vertical direction Dv of the light collecting optical system 40d can be adjusted independently of each other.

### E. Fifth Embodiment:

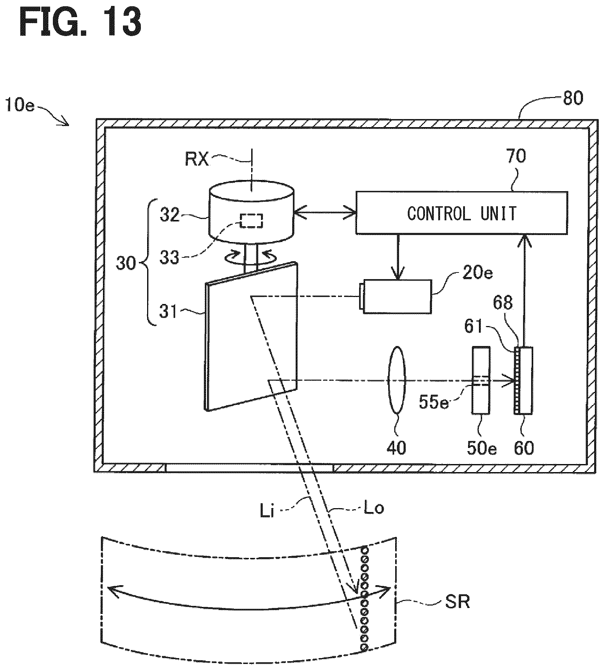

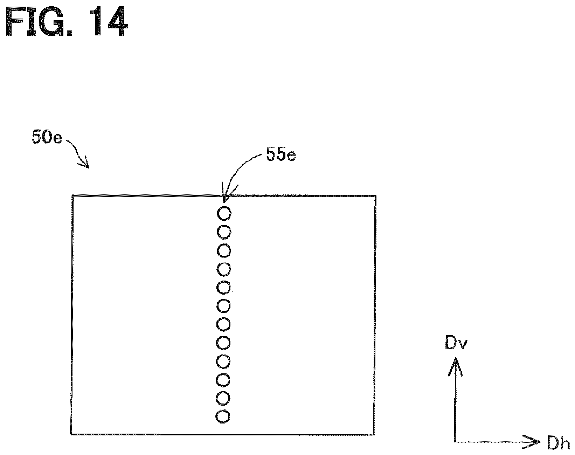

As shown in FIGS. 13 and 14, in a distance measuring device 10e of the fifth embodiment, the configurations of the light emitting unit 20e and the aperture unit 50e are different from those of the first embodiment. The other configurations are the same as those of the first embodiment. As shown in FIG. 13, in the present embodiment, the light emitting unit 20e includes a vertical cavity surface emitting laser (VCSEL) as a light emitting element, and emits a plurality of dot-like irradiation lights Lo aligned along the vertical direction Dv. As shown in FIG. 14, the opening 55e of the aperture unit 50e is formed of a plurality of through holes aligned in the vertical direction Dv. Each through hole is circular in shape. In the present embodiment, the direction in which the multiple through holes are arranged is referred to as the longitudinal direction of the opening 55e, and the direction perpendicular to the longitudinal direction and the central axis of the through hole is referred to as the lateral direction of the opening 55e. The distance measuring device 10e of the fifth embodiment described above, like the first embodiment, can increase the light intensity resolution while suppressing a decrease in the optical S/N ratio, and can suppress a decrease in the positional resolution in the vertical direction Dv. The distance measuring device 10e of the fifth embodiment may include the aperture unit 50 similar to that of the first embodiment, instead of the aperture unit 50e described above. The distance measuring device 10e may include the light collecting optical system 40b to 40d of any one of the second, third and fourth embodiments, instead of the light collecting optical system 40 of the first embodiment.

### F. Other Embodiments:

(F1) In the distance measuring devices 10 to 10e of the above-mentioned embodiments, the light collecting optical system 40 to 40d is composed of two lenses 41 to 41d and 42 to 42d. Alternatively, the light collecting optical systems 40 to 40d may be configured with a single lens having different refractive powers in the horizontal direction Dh and the vertical direction Dv. The light collecting optical system 40 may be composed of, for example, one toroidal lens, one toric lens, or one anamorphic lens. In this case, the light collecting optical systems 40 to 40d can be made smaller than in a configuration in which the light collecting optical systems 40 to 40d are composed of a plurality of lenses.

(F2) The distance measuring devices 10 to 10e of the above-described embodiments include the scanning unit 30 that scans the irradiated light Lo along the horizontal direction Dh. In contrast, the distance measuring devices 10 to 10e do not need to include the scanning unit 30.

The present disclosure should not be limited to the embodiments described above, and various other embodiments may be implemented without departing from the scope of the present disclosure. For example, in order to solve some or all of the above problems, or to achieve some or all of the above effects, the technical features in the embodiments can be replaced or combined as appropriate. Also, if the technical features are not described as essential in the present specification, they can be deleted as appropriate.

### [Feature 1]

A distance measuring device (10) includes a light emitting unit (20) that emits irradiation light (Lo), a light receiving unit (60) having a light receiving surface (61) for receiving incident light (Li) including reflected light of the irradiation light, and in which one pixel (65) is composed of a plurality of single-photon avalanche diodes (68), an aperture unit (50) having an opening (55) through which the incident light incident on the light receiving unit passes and limiting the amount of the incident light passing through, and an optical system (40) having different refractive powers in a longitudinal direction of the opening and a lateral direction of the opening, the optical system focusing the incident light on the light receiving surface in the longitudinal direction and focusing the incident light on the opening in the lateral direction.

### [Feature 2]

The distance measuring device described in the feature 1 may include a scanning unit (30) having a mirror (31) that reflects the irradiation light and the incident light, and rotating the mirror around a rotation axis (RX) parallel to the longitudinal direction of the opening, thereby scanning the irradiation light emitted from the light emitting unit along the lateral direction and causing the incident light to enter the optical system.

### [Feature 3]

In the distance measuring device according to the feature 1 or 2, a length of one pixel in the lateral direction of the opening may be longer than a length of one pixel in the longitudinal direction of the opening.

### [Feature 4]

In the distance measuring device according to any one of the features 1 to 3, the light emitting unit may irradiate a linear irradiation light along the longitudinal direction of the opening.

### [Feature 5]

In the distance measuring device according to any one of the features 1 to 3, the light emitting unit may irradiate the illumination light in a form of a plurality of dots aligned along the longitudinal direction of the opening.

### [Feature 6]

In the distance measuring device according to any one of the features 1 to 5, the optical system may include a spherical lens and a cylindrical lens.

### [Feature 7]

In the distance measuring device described in any one of the features 1 to 5, the optical system may include a cylindrical lens having a central axis parallel to the longitudinal direction of the opening, and a cylindrical lens having a central axis parallel to the lateral direction of the opening.

### [Feature 8]

In the distance measuring device according to any one of the features 1 to 5, the optical system may include a toroidal lens.

Although the present disclosure has been described in accordance with the embodiments, it is understood that the present disclosure is not limited to the embodiments and structures disclosed therein. The present disclosure encompasses various modifications and variations within the scope of equivalents. In addition, while the various combinations and configurations, which are preferred, other combinations and configurations, including more, less or only a single element, are also within the spirit and scope of the present disclosure.

## Claims

1. A distance measuring device (10), comprising:
a light emitting unit (20) configured to emit irradiation light (Lo);
a light receiving unit (60) having a light receiving surface (61) for receiving incident light (Li) including reflected light of the irradiation light, and in which one pixel (65) is composed of a plurality of single-photon avalanche diodes (68);
an aperture unit (50) having an opening (55) through which incident light incident on the light receiving unit passes and limiting an amount of the incident light passing through; and
an optical system (40) having different refractive powers in a longitudinal direction of the opening and a lateral direction of the opening, the optical system focusing the incident light on the light receiving surface in the longitudinal direction and focusing the incident light on the opening in the lateral direction.

2. The distance measuring device according to claim 1, further comprising,
a scanning unit (30) having a mirror (31) that reflects the irradiation light and the incident light, and rotating the mirror around a rotation axis (RX) parallel to the longitudinal direction of the opening, thereby scanning the irradiation light emitted from the light emitting unit along the lateral direction and causing the incident light to enter the optical system.

3. The distance measuring device according to claim 1, wherein
a length of one pixel in the lateral direction of the opening is longer than a length of one pixel in the longitudinal direction of the opening.

4. The distance measuring device according to claim 1, wherein
the light emitting unit emits a linear irradiation light along the longitudinal direction of the opening.

5. The distance measuring device according to claim 1, wherein
the light emitting unit irradiates the irradiation light in a form of multiple dots aligned along the longitudinal direction of the opening.

6. The distance measuring device according to claim 1, wherein
the optical system includes a spherical lens and a cylindrical lens.

7. The distance measuring device according to claim 1, wherein
the optical system includes a cylindrical lens having a central axis parallel to the longitudinal direction of the opening, and a cylindrical lens having a central axis parallel to the lateral direction of the opening.

8. The distance measuring device according to claim 1, wherein
the optical system includes a toroidal lens.
